(19) Europäisches Patentamt
European Patent Office
Office européen des brevets

(11) Publication number: **0 258 454 B1**

(12) # EUROPEAN PATENT SPECIFICATION

(45) Date of publication of patent specification: **21.04.93** (51) Int. Cl.5: **B23K 9/02**, B23K 26/00

(21) Application number: **87901655.8**

(22) Date of filing: **26.02.87**

(86) International application number:
**PCT/JP87/00123**

(87) International publication number:
**WO 87/05244 (11.09.87 87/20)**

(54) **METHOD AND DEVICE FOR CUTTING AND WELDING STEEL BELTS.**

(30) Priority: **28.02.86 JP 43189/86**
**11.03.86 JP 54406/86**
**25.12.86 JP 311111/86**
**09.02.87 JP 29177/87**

(43) Date of publication of application:
**09.03.88 Bulletin 88/10**

(45) Publication of the grant of the patent:
**21.04.93 Bulletin 93/16**

(84) Designated Contracting States:
**DE FR GB NL SE**

(56) References cited:
**JP-A- 5 190 949**
**JP-A- 5 731 489**
**JP-A-58 151 986**
**JP-U-57 102 480**
**JP-U-60 113 190**

(73) Proprietor: **KAWASAKI STEEL CORPORATION**
**1-1-28 Kitahonmachi-Dori Chuo-ku**
**Kobe-shi Hyogo-ken 651(JP)**

(72) Inventor: **FUJII, Mamoru**
**Mizushima Kawasaki-dori 1-chome**
**Kurashiki-shi**
**Okayama 712(JP)**
Inventor: **NODA, Kazuo**
**2-88, Wakinohamakaigan-dori**
**Chuo-ku Kobe-shi Hyogo 651(JP)**
Inventor: **NAGASAKA, Shoji**
**2-88, Wakinohamakaigan-dori Chuo-ku**
**Kobe-shi Hyobe 651(JP)**
Inventor: **TAJIKA, Hiroshi**
**2-88, Wakinohamakaigan-dori Chuo-ku**
**Kobe-shi Hyogo 651(JP)**
Inventor: **ONO, Koji**
**2-88, Wakinohamakaigan-dori Chuo-ku**
**Kobe-shi Hyogo 651(JP)**

(74) Representative: **KOHLER SCHMID + PARTNER**
**Patentanwälte**
**Ruppmannstrasse 27**
**W-7000 Stuttgart 80 (DE)**

EP 0 258 454 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to a method and an apparatus for cutting and welding steel strips in accordance with the precharacterizing parts of the claims 1, 5 and 6, respectively.

Such a method and apparatus are known from JP-A-58-151986.

BACKGROUND TECHNIQUES

Heretofore, in order to perform rolling and other processing of steel strips (hereinafter referred to as processing) in a steel strip processing line, consecutively and continuously supplied steel strips are joined together by arc welding together the facing ends of the steel strips. Also, such processings as rewinding welding, slitting and cutting (hereinafter referred to as conditioning) are performed on silicon steel strips, for instance, before the steel strips are supplied as product to the customer. Among these processings, to supply a unit weight as required by the customer, steel strips are joined together by butt welding to obtain a continuous steel strip before cutting to meet said unit weight for the purpose of supplying the steel strips in the form of coils or sheets to the customer. This means that after the weld formed during the conditioning no subsequent treatment of the steel strips is carried out before the steel strips are delivered to the customer, so that the steel strips are required to be of high quality. Particularly, from the standpoint of reducing power loss thin silicon steel strips are required to be rolled to thin strips having a thickness of about 0.35 mm or below. Therefore, very thin steel strips are welded together before they are supplied to the customer. Where ends of very thin steel strips are cut by a shear as in the prior art and the cut ends are welded by the TIG or MIG arc welding as in the prior art, however, it is impossible to obtain a weld which meets the above requirement.

In either the former case of rolling and other processings or the latter case of conditioning of silicon steel strips or the like, the trailing end of a preceding steel strips and the leading end of a succeeding steel strips are cut in a continuous processing line of a commonly termed shear welder, and the cut end surfaces of the two, i.e., preceding and succeeding, steel strips are caused to abut and then arc welded by the TIG, MIG or like arc welding. In other words, in a continuous processing line called shear welder, consecutive steel strips are caused to run from the upstream side to the downstream side and a cutting unit and a welding unit for cutting and welding ends of steel strips are respectively provided along the flow of steel strips. Each end of the steel strip is cut by an upstream side shearing unit, and in a downstream side welding unit the cut ends of consecutive steel strips are abutted and welded usually by the TIG or MIG arc welding.

In the case of the TIG or MIG arc welding, however, there is great thermal influence, and also the weld bead width tends to be large. These welding processes, therefore, are unsuitable in case of welding thogether thin steel strips such as silicon steel strips during the process of conditioning. More specifically, when the MIG or TIG arc welding is used in the process of conditioning, the quality of the weld is reduced when processing thin steel strips. If the joined steel strips are wound into the form of a coil without treating at all the weld flaws are generated in the steel strip, thus greatly deteriorating the quality of the product. For this reason, it has been in practice to remove the weld when the strip is wound into a coil in order to avoid troubles. It has therefore been difficult for steel strips having thickness of 0.35 mm or below to be supplied as a continuous steel strip. Recently, high performance laser welding process and laser welder have been developed, achieving a high quality welding. When the high performance laser welding is used for the welding in the process of conditioning, therefore, the continuous steel strip may be wound into the form of a coil without removing the weld. By so doing, no substantial flaw is generated. Further the laser welding process permits sufficient effects and great advantages to be obtained when it is used for the welding in the conditioning process of silicon steel strips. That is, the weld obtained by the laser welding has a very small weld bead width and is substantially free from thermal influence. This means that the joint steel strip may be stamped by the customers, without applying any treatment to the weld bead by themselves.

This point is very advantageous for the customers. Actually, silicon steel strips are usually stamped in a high speed continuous stamping line. Therefore, very long steel strips are desired for increasing the stamping efficiency.

However, if it is intended to use the advantages of the effective laser welding as noted above, the aim cannot be attained even by using a laser welding torch in lieu of the prior art TIG or MIG welding torch in the prior art welding apparatus of the continuous processing line such as a shear welder. In other words, unless the cutting of steel strip ends and abutting of cut ends are done with high accuracy in the continuous processing line such as the shear welder, sufficient effects of the laser welding can not be obtained, so that high quality welds can not be obtained. For the sake of reference, a high quality weld which meets the customer's demands is such

(a) that it is homogeneous and passes a predetermined reference,

(b) that its mechanical characteristics pass a predetermined reference, and

(c) that it is free from bends or misalignment of edges (i.e., failure of alignment of the edges of two butt-welded steel strips along a straight line), and the straightness of the edges of the butt-welded steel strips is met.

For reducing iron loss, there is a trend for reducing the thickness of silicon steel strips, particularly directional steel strips, from about 0.35 mm to 0.30 mm to about 0.35 mm to 0.15 mm or below. The smaller the thickness, the more it is difficult to cut steel strip ends with high accuracy and abut the cut end surfaces with high accuracy and without any gap.

Further, there is a case where cold-rolled thin steel strips are rewound from a coil for rolling or thermal treatment before being supplied as product. Again in this case, supplied steel strips are joined together by welding so as to perform a cotinuous rolling operation. It has been tried to use the laser welding for this purpose. In other words, in the past the TIG, MIG and like welding processes were used in the cold-rolled steel strip processing lines, but recently it has been tried to use the laser welding which features the high energy density. The reason for this is as for silicon steel strips. That is, with the laser welding it is possible to operate with small laser beam diameter up to about 0.1 mm. It is thus possible to increase the energy density and reduce thermal influence, so that weld beads having flat surface can be readily obtained. This means that the laser welding permits welding of cold-rolled steel strips and stainless steel strips as well as silicon steel strips, which are very thin, typically about 0.05 mm, and until now could not be welded by the prior art TIG or MIG welding. Even in this case, however, the use of the laser welding requires high accuracy of the cutting and butting operations before the welding process. Particularly, it is important to cut ends of steel strips accurately and perpendicularly to the center line of the steel strips and effect the abutting of the cut ends such as not to produce departure from the alignment of the edges of the abutted steel strips. To meet these requirements, there have been developed techniques of accurately cutting ends of steel strips and causing accurate abutting of the cut ends for welding. One such technique is disclosed in Japanese Utility Model Laid-Open 57-102495.

In order to avoid departure from the alignment of edges in the weldment, the cut ends of steel strips should be straight and accurately perpendicular to the center line of the steel strips. Then, the cut end surfaces should be caused to about that the edges of the abutted steel strips are aligned with respect to a straight line. The Japanese Utility Model Laid-Open 57-102495 disclose a device for securing one edge of a steel strip such that it is parallel to the center line of the steel strip. In this aligning device, a side guide is secured to one side of a work table at a cutting or welding position of a continuous steel strip processing line. One edge of steel strip is aligned by urging it against the side guide, and in this state the cutting or abutting prior to welding is done. The device noted above further features that when urging one edge of the steel strip a press belt is urged against the surface of he steel strip, and it is driven to pull the steel strip toward the side guide on the work table so as to bring one edge of the steel strip into contact with the side guide, thus effecting the positioning of the steel strip.

However, since this aligning device moves the steel strip with the press belt in contact with the surface of the steel strip, press flaws are liable to be formed on the surface of the steel strip, particularly the surface of a very thin steel strip, by the urging force of the press belt and movement thereof in the width direction of the work table. Further, when the steel strip is very thin, it is liable to be in close contact with the work table on the continuous processing line such as a shear welder. Therefore, it is difficult to move the steel strip in the width direction even if its surface is urged by the press belt. Therefore even if this aligning device is used, it is difficult to obtain a weldment free from any edge alignment departure.

Denoting the coefficient of friction between the press belt and steel strip by $\mu_1$, the coefficient of friction between the steel strip and work table by $\mu_2$, urging force of the press belt by N and the weight of the steel strip by W, the force, with which the steel strip is pulled by the press belt, is

$$N\mu_1-(N + W)\mu_2 = N(\mu_1 - \mu_2) -W\mu_2$$

This relation means that in order for the steel strip to be pulled by the press belt it is necessary to meet a condition $\mu_1 > \mu_2$

Further, since the weight W of the steel strip varies with the thickness and width of the strip, it is necessary to adjust the urging force N of the press belt. Furthermore, with a thin steel strip, an excessive pulling force will cause a strain of the strip after the edge thereof has been brought into contact with the side guide. In such a case, the edges of the two steel strips will be truely straight after subsequent cutting and abutting. A desired accuracy of joint thus can not be obtained.

In the mean time, in order to accurately stop the steel strip as soon as one edge thereof is brought into contact with the side guide, it may be thought to use a high accuracy sensor, a continuous motor, etc. However, such equipment is expensive and poses many problems in practice, so that it has not yet been in practice.

JP-A-57-31489 discloses a method and apparatus for joining of steel plates by laser. Before welding, cutting of the plates is performed by a laser beam.

DISCLOSURE OF THE INVENTION

Accordingly, it is the primary object of the present invention to enhance the accuracy of the butting and welding processes, in particular in a butting and welding process for adjoining facing ends of thin steel strips having a thickness of 1 mm or less.

The above object, according to the invention, is solved by the features of the method claim 1 and the apparatus claims 5 and 6, respectively. The claims 2 to 4 which are dependent on claim 1 characterize advantageous developments thereof. Claim 7 which is dependent on claim 5 or 6 characterizes advantageous developments of the features of these claims.

According to an advantageous effect of the invention even with steel strips having a thickness of 1 mm or less, particularly thin steel strips of 0.1 mm in thickness, when the edge of the steel strip is brought into contact with the reference block, a slip of the steel strip with respect to the electromagnetic chuck is caused through adjustment of the magnetic force of the electromagnetic chuck with current adjustment, whereby it is possible to eliminate unnecessary pulling force applied to the edge of the steel strip so that no strain is produced.

An essential feature of the invention resides in that when causing the abutting of the two cut end surfaces of steel strips prior to welding the end surfaces with a welding torch in the width direction of the steel strips in the continuous processing line, the facing end of one of the steel strips is attracted and held by an electromagnetic chuck upstream or downstream the torch running line, on which side the torch running line is not contained, the facing end of the other steel strip is raised so that the cut end surface is directed obliquely and downwardly toward the cut end surface of the other steel strip, and in this state the abutting surfaces of the two steel strips are caused to abut. Thus, according to the invention for butt welding the facing ends of the preceding or succeeding steel strips, the preceding steel strip with the cut trailing end surface can be held and magnetized by the electromagnetic chuck provided on the side, which is free from the torch running line, with the cut end surface as the abutting surface in register with the center line of the continuous processing line. Then, the succeeding steel strip with the cut leading end is raised by suitable means, e.g., a roller, to direct the cut end surface at the leading end obliquely downwardly toward the end surface of the preceding steel strip. Since the trailing end of the preceding steel strip has been magnetized by the electromagnetic chuck, when the succeeding steel strip is moved such the butt surface at its leading end directed obliquely and downwardly and the butt surface approaches the butt surface at the trailing end of the preceding steel strip, the butt surface is pulled and attracted to the butt surface of the preceding steel strip, whereby it is possible to obtain a butt joint which is in accurate register with the running line of the welding torch. According to a further aspect of the invention, alignment can be effected by optically enlarging the opposite ends of the butt line with the optical enlargement devices. Particularly, when the optical image is processed with an image sensor, the alignment can be done automatically.

BRIEF DESCRIPTION OF THE DRAWINGS

Fig. 1 is a side view showing a cutter/welder utilizing a laser beam in an embodiment of the invention;

Fig.2 is a front view, partly in section, taken along arrow line A-A in Fig. 1;

Fig. 3 is a side view, showing an example of the steel strip feeder;

Fig. 4 is a transversal sectional view, showing the steel strip feeder shown in Fig. 3;

Fig. 5 is a plan view showing an example of an example of aligning units constituting part of the cutter/welder shown in Fig. 1;

Fig. 6 (a) to (e) are views showing successive steps of cutting, causing abutting and welding of steel strips according to the invention;

Fig. 7 is a sectional view showing a cutter/welder utilizing a laser beam in a different embodiment of the invention; and

Fig. 8 is a plan view showing an example of aligning units constituting part of the cutter/welder shown in Fig. 7.

BEST FORMS OF CARRYING OUT THE INVENTION

Referring now to Fig. 1, reference numeral 1 designates a preceding steel strip, and numeral 2 a succeeding steel strip. These steel strips 1 and 2 are consecutively fed by a pair of pinch rollers 3 and 4 to a cutter/welder which constitutes part of a continuous processing line. The cutter/welder includes a cutting unit 5 and a welding laser torch 6 provided in the mentioned order from the upstream side. Aligning units 7 to 9, as shown by dashed lines in Fig. 1, are provided before, between and after the cutting unit 5 and welding torch 6 in the direction of feeding of steel strips. Detailed construction of the aligning units 7 to 9 is shown in Fig. 5. In the cutting and welding operation, the trailing end of the preceding steel strip 1 fed first by the upstream side pinch rollers 3 and 4 is aligned by the aligning unit 8 such that one end of it is parallel to the center line of the continuous processing line (see Fig. 5). In this state, the trailing end of the preceding steel strip 1 is cut by the cutting unit 5. After the cutting, the preceding steel strip 1 is further fed by a feeding clamp 10 to the downstream side to be stopped when its cut end 1a comes to a position beneath the welding torch 6. Beneath the welding torch 6, one edge of the preceding steel strip 1 is aligned by the aligning unit 9 to make it parallel to the center line C-C of the continuous processing line (see Fig. 5). Also, the cut end surface 1a of the preceding steel strip 1 is brought into register with a line 6a, along which the welding torch 6 is moved (see Fig. 5), by causing movement of a work table 13 beneath the welding torch 6 in the direction of feed in the continuous processing line and also revolution of the work table 13 about a revolving section 21 (see Fig. 2). After the preceding steel strip 1 has been set in this state, the succeeding steel strip 2 is fed by the pair of pinch rollers 3 and 4. The leading end of the succeeding steel strip 2 is aligned by the aligning unit 7 such that one edge is parallel to the center line C-C of the continuous processing line. In this state, it is cut by the cutting unit 5. Subsequently, the succeeding steel strip 2 is further fed by the pair of pinch rollers 3 and 4 to the downstream side, and beneath the welding torch 6 the leading end of the succeeding steel strip 2 is aligned by the aligning unit 8 such that one edge is parallel to the center line 6 of the continuous processing line. Also, as shown in Fig. 6(d), the cut end surface 2a of the leading end of the succeeding steel strip 2 is directed downwards for abutting with the cut end surface 1a of the preceding steel strip 1 having been positioned to be in register with the torch running line 6a. In this state, the abutted end surfaces are welded together by driving the welding torch 6.

As shown in Fig. 1, a plurality of work tables 11 to 14 are arranged along a straight line constituting a feed path, along which the preceding and succeeding steel strips 1 and 2 are fed. Of these work tables 11 to 14, the work table 13 which is disposed underneath the welding torch 6 is capable of being moved in the direction of the continuous processing line, i.e., feed path, and also revolved about the revolving section 21 (see Fig. 2). By causing the parallel movement and revolution of the movable work table (hereinafter referred to as movable table 13) after one edge of the preceding steel strip 1 has been aligned, the cut end surface 1a of the preceding steel strip 1 can be finally adjusted such that it is accurately in register with the torch running line 6a (which is positioned to be stringently perpendicular to the center line C-C in the continuous processing line).

In the cutter/welder which constitutes part of the continuous processing line, the upstream side cutting unit 5 is usually provided as a shearing unit with a shear or the like or a fusion severing unit for effecting fusion severing with a laser beam or a cutting unit for effecting cutting with a grindstone. The welding torch (hereinafter referred to as torch) 6 is provided downstream the cutting unit 5. At this time, the torch running line 6a is positioned such that it extends in a direction stringently perpendicular to the center line C-C of the continuous processing line (see Fig. 5), i.e., the direction of running of the preceding and succeeding steel strips 1 and 2, and then the torch 6 is provided such that it can run along the torch running line 6a. The movable table 13 which is provided underneath the torch 6 is constructed such that it can undergo parallel movement in the direction of running of the preceding and succeeding steel strips 1 and 2, i.e., along the center line C-C of the continuous processing line. Also, it is provided on a revolving table 20 to be noted above such that it can be revolved about the revolving section 21 (see Fig. 2).

The torch 6 is constructed such that it is vertically movable and can also run in stringent register with the torch running line 6a positioned to be perpendicular to the direction of running of the preceding and succeeding steel strips 1 and 2. On the opposite sides of the torch 6, securement clamps 16 and 17 are provided such that they are vertically movable.

On the movable table 13 a back bar 15 is provided in register with the torch running line 6a (see Fig. 5). Downstream and upstream side electromagnetic chucks 18 and 19 are provided on the opposite sides of the back bar 15. Thus, in the abutting and welding operations, the trailing end of the preceding steel strip 2 are held independently from above the securement clamps 16 and 17. On the movable table 13 the trailing end of the preceding steel strip 1 and leading end of the succeeding steel strip 2 are held by magnetization by the downstream and upstream side electromagnetic chucks 18 and 19.

The mechanism for causing the parallel movement and revolution may have any desired construction. To ensure accurate abutting, the revolving table 20 is constructed as follows such that it is capable of revolution about the revolving section 21 and the movable table 13 can undergo parallel movement along the revolving table 20.

The revolving table 20 is disposed on a stationary table 37 and is capable of revolution about the intersection between one reference side surface 13a of the movable table 13 and the torch running line 6a (see Fig. 5), e.g., about the revolving section 21 provided between the revolving and stationary tables 20 and 37, as shown in Fig. 2.

To permit the parallel movement of the movable table 13 or revolution of the revolving table 20 to be effected as a fine motion, a moving mechanism and a butt state detection mechanism are constructed as follows.

As shown in Fig. 2, of the work tables 11 to 14 constituting the feed path of the preceding and succeeding steel strips 1 and 2, i.e., the running path of the continuous processing line, the movable table 13 is strided by a gate-shaped frame 22 provided on a base 26. A top beam 22a of the gate-shaped frame 22 is provided with upper and lower tracks, e.g., rails 23a and 23b, extending in its longitudinal direction. The torch 6 is provided such that it can run along these rails 23a and 23b. A laser beam is supplied from a laser 25 to the torch 6, and it is converged to a diameter of about 0.1 mm to effect laser beam welding of the steel strips 1 and 2. A laser beam path 24 is provided extensively along the top beam 22a of the frame 22. The torch 6 is coupled to the front end of the laser beam path 24, and the laser beam 25 is coupled to the rear end of the laser beam path. Thus, the laser beam emitted from the laser 25 is led through the laser beam path 24 to the torch 6. As the torch 6 runs along the torch running line 6a (see Fig. 5), the laser beam path 6a is extended or contracted, whereby the two steel strips 1 and 2 are welded by laser beam welding.

A mechanism for raising and lowering the downstream and upstream side securement clamps 16 and 17 may have any structure. Usually, the mechanism is constructed as a piston-cylinder mechanism. Besides, it is constructed that it operates in an interlocked relation to the movable table 13, revolving table 20 and stationary table 37.

More specifically, the two securement clamps 16 and 17 are constructed to be identical, and the raising and lowering mechanism is provided independently on each securement clamp. Fig. 2 shows a typical construction of the mechanism for raising and lowering the upstream side securement clamp 16. The mechanism consists of a pair of support pillars 27 provided inside the gate-shaped frame 22, cylinders 28 mounted on the respective support pillars 27 and rods 29 driven by the operating fluid of the cylinders 28. The upstram side securement clamp 16 is mounted on top of the rods 29, and it is raised and lowered with the elongation and contraction of the rods 29. The mechanism for raising and lowering the downstream side securement clamp, which is not shown, has the same construction. To permit revolution of the revolving table 20 and also permit movement of the movable table 13 along the revolving table 20, the revolving table 20 is provided on the inner side of the pair of support pillars 27 constituting part of the raising/lowering mechanism. Translational bearings 31 are provided on the top of the revolving table 20 and the bottom of the movable table 13, and bearing rails 30 are interposed between the upper and lower bearings 31. Thus, the movable table 13 is moved along the revolving table 20 in the direction of running of the preceding and succeeding steel strips 1 and 2, i.e., the center line C-C of the continuous processing line (see Fig. 5). At the time of the abutting operation to be described later, the movable table 13 is moved by slight amounts to bring the abutting surface, namely the trailing end 1a of the preceding steel strip 1 into register with the torch running line 6a (see Fig. 5) and also make an abutting line formed between the two steel strips 1 and 2 to be in register with the torch running line 6. A parallel movement unit for causing a parallel movement of the movable table 13, as shown in Fig. 1, consists of a numerical control motor 32 provided on the revolving table 20 and a ball screw 33 coupled to the numerical control motor 32. The end of the ball screw 33 is coupled to the movable table 13. For this reason, even if the extent of movement for causing the torch running line 6a and abutting line into register with each other is very slight, the numerical control motor 32 can be correspondingly driven to a slight extent to obtain accurate abutting of the two cut end surfaces 1a and 2a.

As mentioned above, the revolving table 20 is caused to undergo revolution about the revolving section 21, which is located at the intersection between the reference side edge 13a of the movable table 13 (see Fig. 2), i.e., the edge parallel to the center line of the continuous processing line, and the torch running line. The revolving mechanism, i.e., the revolving section 21 at the intersection, may consist of a cylindrical bearing 34, a ball screw 35 and a numerical control motor 36. More specifically, as shown in Fig. 2, the cylindrical bearing 34 is provided between the revolving table 20 and stationary table 37, the ball screw 35 is aligned to the cylindrical bearing 34, and the numerical control motor 36 is coupled to the ball screw 35. Therefore, even if a very slight revolution is caused to bring the torch running line 6a and abutting line into register with each other, e.g., of the order of microns, the numerical control motor 36 can be controlled to carry out a corresponding rotation. Further, as will be described later, it is necessary to obtain perfect register of the abutting line with the torch running line 6a (see Fig. 5) after the butt surfaces 1a and 2a of the preceding and succeeding steel strips 1 and 2 (see Fig. 5) have been abutted on the movable table 13. This is done by causing parallel movement and revolution of the movable table 13. To detect the extent of movement, at least two optical enlargement units 37 and 38 are provided for optically enlarging the two ends of the butt line. These two optical enlargement units 37 and 38, like the torch 6, are adapted to run in a direction perpendicular to the center line C-C of the continuous processing line (see Fig. 5).

More particularly, the optical enlargement units 37 and 38 have the same construction and respectively consist of microscopes 37a and 38a, cameras 37b and 38b and movable saddles 37c and 38c. To permit running of the movable saddles 37c and 38c in a direction perpendicular to the center line C-C of the continuous processing line, the saddles 37c and 38c are engaged with the rails 23a and 23b of the torch 6, as shown in Fig. 2. It is possible to drive the movable saddles 37c and 38c independently instead of causing their movement along the same rails 23a and 23b as for torch 6. The movable clamp 10 for causing the preceding steel strip 1 to the downstream side after the cutting of the trailing end, as shown in Figs. 3 and 4, consists of a pair of movable clamp pieces 10a and 10b. The upper clamp piece 10a can be raised and lowered by vertical movement cylinders 39 provided on the opposite sides of the lower clamp piece 10b. The lower clamp piece 10b has a comb-shaped top portion, which is assembled to the work table 14 which has a handle-like shape. The comb-shaped top portion of the lower clamp piece 10b slightly projects upwards from the work table 14. The preceding steel strip 1 thus can be smoothly clamped between the upper and lower clamps 10a and 10b without obstruction of its movement.

A mechanism for moving the movable clamp 10 consists of a numerical control motor 40, a ball screw 41 and a pair of bearings 41a and a bearing rail 42. Therefore, even if the extent of movement of the movable clamp 10 is very slight, e.g., of the order of microns, the rotation of the motor 40 can be controlled correspondingly, and the movable clamp 10 can be moved accurately.

The cutting unit 5 or cutting the facing ends of the preceding and succeeding steel strips 1 and 2, usually consists of a pair of, i.e., upper and lower, blades 5a and 5b, as shown in Fig. 1, and it can cut the ends by shearing. It is also possible to construct the cutting unit 5 such that it fusion separates the end with a laser beam, an electron beam or other heat sources instead of shearing the end. A scrap removal unit 43 may be provided, if necessary, to remove scrap produced as a result of the cutting operation from the work table 12.

The three aligning units 7 to 9, which are provided in the mentioned order from the upstream side as shown in Fig. 1, have the same construction as shown in Fig. 5.

As shown in Fig. 5, the aligning units 7 to 9 consist of respective electromagnetic chucks 7a, 8a and 9a and reference blocks 7b, 8b and 9b. The electromagnetic chucks 7a, 8a and 9a and reference blocks 7b, 8b and 9b can be moved by extension/contraction devices 7c, 8c, and 9c in a direction perpendicular to the center line C-C of the continuous processing line. When cutting the trailing end of the preceding steel strip 1, the aligning unit 8 is used as noted above.

More specifically, the opposite side reference blocks 8b provided outside of the continuous processing line are moved by the respective extension/contraction devices 8c to a reference position, at which they are parallel to the center line C-C of the continuous processing line. Then, the preceding steel strip 1 is fed by the upper and lower pinch rollers 3 and 4, as shown in Fig. 1, and it is stopped while its trailing end is on the upstream side of the cutting unit 5 (only the upper blade 5a thereof being shown in Fig. 5). The central electromagnetic chuck 8a is partly assembled in the work table 11. When the electromagnetic chuck 8a is excited at this time, the underside of the preceding steel strip 1 is attracted to the chuck 8a. In this state, the electromagnitic chuck 8a is pulled by the extension/contraction device 8c in a direction away from the continuous processing line in Fig. 5. The side edge 1b of the preceding steel strip 1 is thus pulled toward and brought into contact with the reference blocks 8b, so that it is aligned thereto. In this state, the side edge 1b of the preceding steel strip 1 is parallel to the center line C-C of the continuous processing line. Thus, by lowering the upper blade 5a disposed perpendicular to the center line C-C in this state, the trailing end of the preceding steel strip 1 is cut to obtain the cut end surface as the abutting surface perpendicular to the center line C-C.

When cutting the leading end of the succeeding steel strip 2, one side edge 2b of it is aligned by the aligning unit 7 so that it is parallel to the center line C-C. Again at this time, the leading end is cut in the same manner as for the preceding steel strip 1 to obtain the cut end surface 2a perpendicular to the center line C-C at the leading end of the succeeding steel strip 2. Further, when the cut end surfaces 1a and 2a of the steel strips 1 and 2 are abutted on the movable table 13, the side edges 1b and 2b are rendered parallel to the center line C-C. At this time, the preceding and succeeding steel strips 1 and 2 are aligned by the respective aligning units 9 and 8.

When aligning the side edges 1b and 2b of the steel strips with the aligning units 7 to 9 in the above way, it is desired to adjust the magnetic forces of the electromagnetic chucks 7a, 8a and 9a such as to permit slip of the electromagnetic chucks 7a, 8a and 9a with respect to the two steel strips 1 and 2 with the side edges 1b and 2b thereof in contact with the reference blocks 7b, 8b and 9b, thus aligning the side edges 1b and 2b of the steel strips 1 and 2 to be parallel to the center line C-C.

More specifically, the steel strips 1 and 2 are moved in a direction perpendicular to the center line C-C with their under side attracted to the electromagnetic chucks 7a, 8a and 9a by electromagnetic forces, and thereby the side edges 1b and 2b of the steel strips 1 and 2 are brought into contact with the reference blocks 7b, 8b and 9b provided on the opposite sides of the electromagnetic chucks 7a, 8a and 9a. If the magnetic forces of the electromagnetic chucks 7a, 8a and 9a are excessive at this time, the side edges 1b and 2b of the steel strips 1 and 2 are liable to be stressed by the pulling force. In this case, the side edges 1b and 2b can not be accurately aligned.

If the magnetic forces are insufficient, the steel strips 1 and 2 can not be moved against the frictional resistance. Further, the pulling force based on the magnetic forces of the electromagnetic chucks 7a, 8a and 9a are varied according to the thickness of the steel strips. That is, with the same current supplied to the electromagnetic chucks 7a, 8a and 9a, the pulling force that is produced is large if the thickness is large, while it is small if the thickness is small. Meanwhile, it is difficult to strain the side edges 1b and 2b of the steel strips 1 and 2 when their thickness is large, while they are easily strained when their thickness is small.

Generally, the proper pulling force should be adjusted to be in a range greater than the pulling force, with which the steel strips 1 and 2 are moved to bring the side edges 1b and 2b into contact with the reference blocks 7b, 8b and 9b, but less than the pulling force, with which the edges 1b and 2b are stressed in contact with the reference blocks 7b, 8b and 9b. Therefore, when pulling the steel strips 1 and 2 with the electromagnetic chucks 7a, 8a and 9a, the magnetic forces of the electromagnetic chucks 7a, 8a and 9a are suitably adjusted through current adjustment as soon as one of the side edges 1b and 2b is brought into contact with some of the reference blocks 7b, 8b and 9b. In this way, the steel strips 1 and 2 are aligned with respect to the electromagnetic chucks 7a, 8a and 9a. By aligning the side edges 1b and 2b with respect to the steel strips 1 and 2 in this way, the pulling force is held in an adequate range at the time of the contact, so that the side edges 1b and 2b of the steel strips 1 and 2 can be aligned without generation of any strain. Until the side edges 1b and 2b are brought into contact, the pulling force can be increased so that the steel strips 1 and 2 can be moved irrespective of their weight and thickness.

This effect is promoted by the provision of the reference blocks 7b, 8b and 9b on the opposite sides of the electromagnetic blocks 7b, 8b and 9b in the aligning units 7 to 9, as shown in Fig. 5, and the side edges 1b and 2b can be accurately aligned to be parallel to the center line C-C.

As an example, when the side edge 2b of the succeeding steel strip 2 is brought into contact with one of the opposite side reference block 7b, the succeeding steel strip 2 experiences a rotational moment about the reference block 7b in contact with it due to the pulling force of the electromagnetic chuck 7a. When the side edge 2b of the succeeding steel strip 2 is brought into contact with the opposite side reference blocks 7b, the side edge 2b of the succeeding steel strip 2 becomes parallel with the center line C-C. When a strong pulling force is subsequently exerted to the succeeding steel strip 2, a strain is liable to be generated in the side edge 2b. However, since the magnetic force is adjusted with the electromagnetic chuck 7a as soon as the succeeding steel strip 2 is brought into contact, a slip of the strip 2 with respect to the electromagnetic chuck 7a is caused. Thus, it is possible to align the edge 2b of the succeeding steel strip without generation of any strain.

After the facing ends of the steel strips 1 and 2 have been cut by the cutting unit 5, the cut end surface 1a and 2a are welded by butt welding on the movable table 13 under the torch 6. For the abutting to be done perfectly, a roller 44 is provided upstream the movable table 13 such that it can be raised and lowered by a vertical movement cylinder 45. With the provision of the roller 44 in this way, it cooperates with the pair electromagnetic chucks 18 and 19 on the movable table 13 to cause the abutting surface 1a of the preceding steel strip 1 to abut with the abutting surface 2a of the succeeding steel strip 2 without gap formed between the two surfaces. After the preceding steel strip 1 has been fed by the pair of pinch rollers 3 and 4 and its trailing end has been cut by the upper and lower blades 5a and 5b, the strip 1 is brought to the welding position, i.e., the movable table 13 as shown in Fig. 6(b). On the movable table 13, the cut end surface 1a of the trailing end of the preceding steel strip 1 is brought into register with the torch running line 6a, and the preceding steel strip 1 is secured at this position by raising the securement clamp piece 17 by exciting the electromagnetic chuck 19, as shown in Fig. 6-(b). Subsequently, the succeeding steel strip 2 is fed by the pair of pinch rollers 3 and 4 up to the cutting position as shown in Fig. 6(b). Then, the leading end of the succeeding steel strip 2, like the triling end of the preceding steel strip 1, is cut by the upper and lower blades 5a and 5b with the edge aligned (see Fig. 6(b)), and then the scrap is removed by the scrap removal unit 43 (see Fig. 6-(c)). Subsequently, the succeeding steel strip 2 is fed to the downsteam side by the pair pinch rollers 3 and 4. At this time, the roller 44 is raised when it is passed by the leading end of the succeeding steel strip 2. The roller 44 is provided at a position about 40 cm upstream the torch 6 and is adapted to be raised up to a level corresponding to the thickness of the steel strips. For example, when the thickness is about 0.20 mm, the level is adjusted to about 1 cm. Since the succeeding steel strip 2 is very thin, e.g., 0.35 mm or less in thickness, by raising the roller 44 the abutting surface 2a of the leading end is directed obliquely downwards (see Fig. 6(d)). In this state, the succeeding steel strip 2 is fed by the pair of pinch rollers 3 and 4 such that the abutting surface 2a at the leading end is not raised above and slides along the movable table 13. As the succeeding steel strip 2 is fed in this way, the abutting surface 2a of the succeeding steel strip 2 sliding over the movable table 13 approaches the abutting surface 1a of the trailing end of the preceding steel strip 1 as shown in Fig. 6(d). Since the trailing end of the preceding steel strip 1 has been magnetized by the electromagnetic chuck 19 as noted above, the abutting surface 2a is attracted by the abutting surface 1a, and perfect close contact between the two abutting surfaces 1a and 2a can be obtained. More specifically, since the abutting surface 1a of the trailing end of the preceding steel strip 1 has been magnetized by the electromagnetic chuck 19, the approaching abutting surface 2a of the leading end of the succeeding steel strip 2 is strongly attracted in a downwardly directed state, so that it is possible to obtain abutting without substantial gap formed between the two abutting surfaces.

After the completion of the abutting, the roller 44 is lowered. Then, the lower surface of the steel strips is attracted by the other electromagnetic chuck 18, and the upper surface is clamped by the securement clamp 16 (see Fig. 6(e)). Thereafter, the torch running line 6a and abutting line are brought into register by causing parallel movement and revolution of the movable table 13 with two enlargement units 38. In this state, the abutting surfaces are welded together by driving the torch 6.

When cutting the facing ends of the two steel strips 1 and 2 and causing the abutting of the cut end surfaces as the abutting surfaces 1a and 2a, it is sometimes liable that the two abutting surfaces 1a and 2a are not flush but are stepped. Even in this case, since two electromagnetic chucks 18 and 19 are provided on the movable table 13 on the opposite sides of the back bar 15 right underneath the torch 6 and the securement clamp 16 is provided for vertical movement on the other electromagnetic chuck 18, it is possible to correct any bending or warping of the succeeding steel strip 2 and thus remove any step by energizing the other electromagnetic chuck 18. As the laser beam welding torch, there have been developed various torches different with different power sources. Usually, carbonic acid gas laser beam welding torches are used, but also laser beam welding torches using iodine lasers or the like as power source may be used.

Where the torch 6 is constructed as a laser beam welding torch for cutting and welding steel strips with a thickness of about 0.1 mm, there is no need of providing the cutting unit 5 consisting of the upper and lower blades 5a and 5b upstream the torch 6. In other words, it is possible to construct a cutter/welder as part of a continuous processing line as shown in Figs. 7 and 8. In this cutter/welder, the facing ends of the two steel strips 1 and 2 are cut and fusion separated by the torch 6, and then the cut end surfaces 1a and 2a of the two steel strips 1 and 2 are caused to abut each other and then welded. In this case, the cutting by the fusion separation and butt welding are done by the torch 6. Therefore, while the construction shown in Fig. 1 has three aligning units 7, 8 and 9, the construction shown in Fig. 7 has only two aligning units 8 and 9. Also, the movable table 13 shown in Fig. 7 is provided with a fusion separation groove 46 in addition to the back bar 15. For the rest, the construction is the same as that shown in Fig. 1.

In Fig. 7, the preceding steel strip 1 which has been fed by the pair of, i.e., upper and lower, pinch rollers provided on the upstream side and movable clamp 10 provided on the downstream side, is fed up to the movable table 13 underneath the torch 6. This movable table 13, like the movable table shown in Figs. 1 and 2, is capable of parallel movement in a direction of the center line C-C in the continuous processing line (see Fig. 8) and revolution by the revolving table 20 about the revolving section 21. Thus, the edge 1b of the preceding steel strip 1 (see Fig. 8) is made parallel to the center line C-C by the aligning unit 9, and in this state the trailing end is cut on the fusion separation groove 46 by fusion separation by the torch 6. Subsequently, the preceding steel strip 1 is fed by a predetermined distance by the downstream side movable clamp 10. The succeeding steel strip 2 is also fed by the pair pinch rollers 3 and 4 up to the position of the fusion separation groove 46 of the movable table 13. Then, as in the case of the preceding steel strip 1 the edge 2b (see Fig. 8) is made parallel to the center line C-C by the aligning unit 8, and the end is cut by the torch 6. The cut end surfaces 1a and 2a of the preceding and succeeding steel strips 1 and 2 are then caused to abut each other on the back bar 15 in the manner as described above and then welded by the torch 6.

More specifically, the torch 6 effects cutting of the facing ends of the two steel strips 1 by fusion separation and butt welding of the cut surfaces 1a and 2a. The movable table 13 has the fusion separation groove 46 and back bar 15 provided in the mentioned order from the upstream side, and like the arrangement of Fig. 1 electromagnetic chucks 18 and 19 are provided on the opposite sides of the back bar 15.

Thus as shown in Fig. 8, after the edges 1b and 2b of the preceding and succeeding steel strips 1 and 2 have been aligned by the aligning units 9 and 8, the ends of the steel strips are cut by fusion separation on the fusion separation groove 46 by the torch 6. When abutting the cut end surface, the trailing end of the preceding steel strip 1 is fed to a position on the back bar 15, and the cut end surface 1a as the abutting surface is brought into register with the torch running line 6a and then secured and magnetized by the electromagnetic chuck 19. In this state, the cut end surface 2a at the leading end of the succeeding steel strip 2 is caused to approach the cut end surface 1a. As a result, the cut end surface 2a is attracted so that it is reliably caused to abut the abutting surface.

1a. The aligning units 8 and 9, as shown in Fig. 8, consist of resprctive electromagnetic chucks 8a and 9a and reference blocks 8b and 9b. The electromagnetic chucks 8a and 9a and reference blocks 8b and 9b are movable by extension/contraction devices 8c and 9c in a direction perpendicular to the center line C-C of the continuous processing line. Thus, when the facing ends of the preceding and succeeding steel strips 1 and 2 are cut by fusion separation by the torch 6, the aligning units 9 and 8 are used, and when effecting the abutting on the back bar 15 prior to the welding, the aligning units 9 and 8 are used respectively for the respective preceding and succeeding steel strips 1 and 2.

2. The cutting and welding as described above are suited for steel strips with thickness ranging from 0.05 to 1.0 mm, particularly for silicon steel strips. The reason for this is that steel strips with thickness less than 0.05 mm are difficult to process either by shearing, fusion separation, grinding, etc./while steel strips with thickness of 1.0 mm or above may be cut and welded in the prior art process, i.e., without need of using the invention.

INDUSTRIAL UTILITY

As has been described in the foregoing, the method and apparatus for cutting and welding steel strips according to the invention are very effective when joining together facing ends of preceding and succeeding steel strips for permitting a continuous rolling or other processing or when joining together silicon steel strips or the like by welding before supplying them as product to the customer, particularly by a unit weight as required by the customer. In these cases, at the time of cutting the abutting ends and welding the ends of the steel strips the latter are joined together with high accuracy by aligning the center line of the steel strips in parallel to the center line of the processing line. Thus, it is possible to obtain welded steel strips of high quality.

Further, since even with steel strips of about 0.1 mm, for instance, high accuracy abutting can be obtained, it is possible to obtain high performance laser beam welding. Further, when the high performance laser beam welding is applied, the joined steel strip can be wound into the form of a coil without any flaw formed even if the weld is not removed. Thus, the invention is very effective for the joining of silicon steel strips by welding.

## Claims

**1.** A method for cutting, butting and welding facing ends (1a and 2a) of steel strips (1 and 2) being consecutively advanced along a steel strip processing line by using a laser beam, in which said method comprises steps of cutting said opposite ends (1a and 2a) of preceding and succeeding steel strips (1 and 2), butting corresponding cut ends (1a and 2a) each other so as to form a butt line and welding along said butt line by the laser beam, to achieve an end-to-end connection of said opposite ends (1a and 2a);

characterized in that said butting step further comprises the steps of:

- magnetizing a trailing end (1a) of the preceding steel strip (1) so as to generate a magnetic force therein and simultaneously holding said trailing end (1a) of said preceding steel strip (1) in a manner, such that a side edge (1b) of said preceding strip (1) is aligned to be parallel to a center line (C-C) of said steel strip processing line and such that said trailing end (1a) of said preceding strip (1) is in register with a running path (6a) of a laser welding torch (6) permitting it to run in a direction perpendicular to said center line (C-C), by using an electromagnetic chuck (19) adjoining said running path (6a);
- turning a leading end (2a) of the immediately succeeding steel strip (2) in a direction downward and obliquely toward said trailing end (1a) of said preceding steel strip (1), during the course of approaching said leading end (2a) toward said trailing end (1a); and
- attracting said leading end (2a) toward said trailing end (1a), by utilizing said magnetic force generated through said trailing end (1a), till said trailing end (1a) is in contact with said leading end (2a).

**2.** The method according to claim 1, characterized in that said side alignment of the side edge (1b or 2b) of said preceding steel strip (1) or said succeeding steel strip (2) in parallel with said center line (C-C) is effected by a process comprising steps of;
- attracting a reverse surface of either said preceding steel strip (1) or said succeeding steel strip (2) by using an electromagnetic chuck (7a, 8a or 9a) permitted to move along a traverse line substantially at a right angle to said center line (C-C), prior to said cutting or butting step of said facing ends (1a and 2a) of said preceding and succeeding steel strips (1 and 2);
- moving said electromagnetic chuck (7a, 8a or 9a) along said traverse line and simultaneously pulling said preceding or succeeding steel strip (1 or 2) till its side edge (1b or 2b) is brought into contact with a reference block (7b, 8b or 9b) disposed parallel with said center line (C-C); and
- causing a slip of said preceding or said succeeding steel strip (1 or 2) with respect to said electromagnetic chuck (7a, 8a or 9a) while adjusting a magnetic attraction force of said electromagnetic chuck (7a, 8a or 9a) through an adjustment of current to flow through it, thereby achieving a side alignment of said side edge (1b or 2b) of said preceding or said succeeding steel strip (1 or 2).

**3.** The method according to claim 1 or 2, characterized in that said preceding or said succeeding steel strip (1 or 2) have a thickness ranging from 0.05 to 1.0 mm.

**4.** The method according to one of claims 1 to 3, characterized in that said preceding or succeeding steel strip (1 or 2) is a silicon containing steel strip.

**5.** An apparatus for cutting, butting and welding a trailing end (1a) of a preceding steel strip (1) and a facing leading end (2a) of a succeeding steel strip (2) during the course of proceeding of said two strips (1 and 2) along a steel strip processing line by using a laser beam, in which said facing trailing and leading ends (1a and 2a) of said two strips (1 and 2) are subjected in sequence to cutting and butting thereof, so as to form a butt line, and welding along said butt line by using a laser beam for achieving an end-to-end connection between said facing trailing and leading ends (1a and 2a), said apparatus comprising:
- a work table (13) disposed in one portion of said steel strip processing line and having a surface with a back bar (15) on one portion thereof;
- a laser welding torch (6) able to run over said work table (13) along a torch running path (6a) perpendicular to said center line (C-C) and also to move vertically toward and away from said back bar (15);
- a cutting device (5) disposed at a position ahead of said work table (13) of said steel strip processing line, said cutting device (5) serving to cut said facing trailing and leading ends (1a and 2a) of said two strips (1 and 2) along a line substantially perpendicular to said center line (C-C);
- a feeder (3 and 4) disposed at a position ahead of said cutting device (5) and ahead of said steel strip processing line, said feeder (3 and 4) serving to advance said two strips (1 and 2), respectively;

characterised in that said work table (13) can be moved along a centre line (C-C) of said steel strip processing line; and in that the apparatus further comprises:
- a revolving table (20) serving to support said work table (13), said revolving table (20) permitted to be rotated about a pivot (21) thereof, which pivot is included in said torch running path (6a);
- at least one electromagnetic chuck (19) provided at a position adjoining said torch running path (6a) and serving to magnetize and hold said trailing end (1a) of said preceding strip (1); and

- raising means (45) provided at a position ahead of said work table (13), said raising means (45) serving to raise and turn said leading end (2a) of said succeeding strip (2) in a direction downward and obliquely toward said trailing end (1a) of said preceding strip (1).

**6.** An apparatus for cutting, butting and welding a trailing end (1a) of a preceding steel strip (1) and a leading end (2a) of a succeeding steel strip (2) during the course of proceeding of said two strips (1 and 2) along a steel strip processing line by using a laser beam, in which said facing trailing and leading ends (1a and 2a) of said two strips (1 and 2) are subjected in sequence to cutting and butting thereof, so as to form a butt line, and welding along said butt line by using a laser beam for achieving an end-to-end connection between said facing trailing and leading ends (1a and 2a), said apparatus comprising:

- a work table (13) disposed in one portion of said steel strip processing line and having a surface with a back bar (15) on one portion thereof;
- a laser torch (6) able to run over said work table (13) along a torch running path (6a) perpendicular to said center line (C-C) and also to move vertically toward and away from said back bar (15);
- a feeder (3 and 4) disposed at a position ahead of said laser welding/cutting torch (6) and ahead of said steel strip processing line, said feeder (3 and 4) serving to advance said strips (1 and 2);
  characterised in that
  said work table (13) can be moved along a centre line (C-C) of said steel strip processing line; said torch (6) serves to cut and simultaneously weld said trailing and leading ends (1a and 2a) of said two strips (1 and 2) by using a laser beam;
  and in that the apparatus further comprises:
- a revolving table (20) serving to support said work table (13), said revolving table (20) permitted to be rotated about a pivot (21) thereof, which pivot (21) is included in said torch running path (6a);
- a fusion separation groove (46) provided on said work table (13) adjacent to said back bar (15);
- at least one electromagnetic chuck (19) provided at a position adjoining said torch running path (6a), said electromagnetic chuck (19) serving to magnetize and hold said trailing end (1a) of said preceding steel strip (1); and
- raising means (45) provided at a position ahead of said work table (13), said raising means (45) serving to raise and turn said leading end (2a) of said succeeding strip (2) in a direction downward and obliquely toward said trailing end (1a) of said preceding strip (1).

**7.** The apparatus according to claim 5 or 6, characterized in that said apparatus further comprises at least two optical enlargement means (37 and 38) permitted to reciprocate on said work table (13) along a line perpendicular to said center line (C-C) of said steel strip processing line.

## Patentansprüche

**1.** Verfahren zum Schneiden, Stoßen und Schweißen stirnseitiger Enden (1a und 2a) von Stahlstreifen (1 und 2) mittels Laserstrahl, wobei die Stahlstreifen aufeinanderfolgend entlang einer stahlstreifenprozeßstrecke gefördert werden mit folgenden Schritten:
Schneiden der einander entgegengesetzten Enden (1a und 2a) eines vorangehenden und nachfolgenden Stahlstreifens (1 und 2), Stoßen entsprechender geschnittener Enden (1a und 2a) aneinander um eine Stoßlinie zu bilden und Schweißen längs der Stoßlinie mittels des Laserstrahls um eine endseitige Verbindung der einander gegenüberliegenden Enden (1a und 2a) zu erreichen;
dadurch gekennzeichnet, daß
der Stoßschritt weiterhin die Schritte aufweist:

- Magnetisieren eines hinteren Endes (1a des vorangehenden Stahlstreifens (1) um darin eine Magnetkraft zu erzeugen und gleichzeitig Halten dieses hinteren Endes (1a) dieses vorangehenden Stahlstreifens (1) in einer Weise, daß eine Seitenkante (1b) des vorangehenden Streifens (1) parallel zu einer Mittellinie (C-C) der Stahlstreifenprozeßstrecke ausgerichtet ist und daß das hintere Ende (1a) des vorangehenden Streifens (1) mit einer Bewegungsstrecke (6a) des Laserschweißbrenners (6) fluchtet um letzteren in einer zur Mittellinie (C-C) senkrechten Richtung laufen zu lassen unter Verwendung eines elektromagnetischen Spannfutters (19) welches an die Bewegungsbahn (6a) angrenzt;
- Drehen eines vorderen Endes (2a) des unmittelbar folgenden Stahlstreifens (2) in einer Richtung nach unten und schräg zum hinteren Ende (1a) des vorangehenden Stahlstreifens (1) während das vordere Ende (2a) dem hinteren Ende (1a) angenähert wird; und
- Ziehen des vorderen Endes (2a) zum hinteren Ende (1a) hin unter Verwendung der durch das hintere Ende (1a) erzeugte Magnetkraft bis das hintere Ende (1a) das vordere Ende (2a) berührt.

**2.** Verfahren nach Anspruch 1, dadurch gekennzeichnet, daß die seitliche Ausrichtung der Seitenkante (1b oder 2b) des vorangehenden Stahlstreifens (1) oder des nachfolgenden Stahlstreifens (2) parallel zur Mittellinie (C-C) durch einen folgende Schritte aufweisenden Prozeß erfolgt:
- Anziehen einer Rückfläche entweder des vorangehenden Stahlstreifens (1) oder des folgenden Stahlstreifens (2) mittels eines elektromagnetischen Spannfutters (7a, 8a oder 9a), das eine Bewegung längs einer Quertraverse im wesentlichen rechtwinklig zur Mittellinie (C-C) ausführen kann vor dem Schneiden oder Stoßen der stirnseitigen Enden (1a und 2a) des vorangehenden und nachfolgenden Stahlstreifens (1 und 2);
- Bewegen des elektromagnetischen Klemmfutters (7a, 8a oder 9a) längs der Quertraverse und gleichzeitig Ziehen am vorangehenden oder nachfolgenden Stahlstreifen (1 oder 2) bis deren Seitenkanten (1b oder 2b) mit einem Referenzblock (7b, 8b oder 9b) in Berührung kommen, welcher parallel zur Mittellinie (C-C) vorgesehen ist; und
- Bewirken eines Schlupfs des vorangehenden oder nachfolgenden Stahlstreifens (1 oder 2) bezüglich des elektromagnetischen Klemmfutters (7a, 8a oder 9a) während eine magnetische Anziehungskraft des elektromagnetischen Spannfutters (7a, 8a oder 9a) durch Einstellen des durch letzteres hindurchfließenden Stroms eingestellt wird und dadurch Erzielen einer seitlichen Ausrichtung der Seitenkanten (1b oder 2b) des vorangehenden oder nachfolgenden Stahlstreifens (1 oder 2).

**3.** Verfahren nach Anspruch 1 oder 2, dadurch gekennzeichnet, daß der vorangehende oder der nachfolgende Stahlstreifen (1 oder 2) eine Dicke im Bereich von 0,05 bis 1,0 mm hat.

**4.** Verfahren nach einem der Ansprüche 1 bis 3, dadurch gekennzeichnet, daß der vorangehende oder nachfolgende Stahlstreifen (1 oder 2) ein Silizium-Stahlstreifen ist.

**5.** Vorrichtung zum Schneiden, Stoßen und Schweißen eines hinteren Endes (1a) eines vorangehenden Stahlstreifens (1) mit einem diesem gegenüberliegenden vorderen Ende (2a) eines nachfolgenden Stahlstreifens (2) während des Vorrückens der beiden Stahlstreifen (1 und 2) längs einer Stahlstreifenprozeßstrecke mittels eines Laserstrahls, wobei das hintere Ende und das gegenüberliegende vordere Ende (1a und 2a) der beiden aufeinanderfolgenden Stahlstreifen (1 und 2) einem Schnitt- und einem Stoßvorgang um eine Stoßlinie zu bilden und einem Schweißvorgang längs des Stoßlinie mittels eines Laserstrahls zur Erzielung einer stirnseitigen Verbindung zwischen den gegenüberliegenden hinteren und vorderen Enden (1a und 2a) unterworfen werden, wobei die Vorrichtung aufweist:
- einen Arbeitstisch (13) der in einem Abschnitt der Stahlstreifenprozeßstrecke angeordnet ist und der eine Oberfläche mit einer hinteren Traverse (15) an einem Abschnitt desselben aufweist;
- einen Laserschneidbrenner, der sich über dem Arbeitstisch (13) entlang einer Brennerbewegungsbahn (6a) rechtwinklig zur Mittellinie (C-C) und außerdem vertikal zum und vom hinteren Block (15) bewegen kann;
- eine Schneidevorrichtung (5), die an der Stahlstreifenprozeßstrecke vor dem Arbeitstisch (13) angeordnet ist und die dazu dient, die einander zugewendeten hinteren und vorderen Enden (1a und 2a) der beiden Streifen (1 und 2) entlang einer im wesentlichen rechtwinklig zur Mittellinie (C-C) liegenden Linie zu schneiden;
- eine Vorschubvorrichtung (3 und 4), die an einer Stelle vor der Schneidevorrichtung (5) und der Stahlstreifenprozeßstrekke angeordnet ist und die jeweils zum Vorschieben der beiden Streifen (1 und 2) dient;

dadurch gekennzeichnet, daß der Arbeitstisch (13) längs einer Mittellinie (C-C) der Stahlstreifenprozeßstrecke bewegbar ist und daß die Vorrichtung weiter aufweist:
- einen Drehtisch (20), der zum Lagern des Arbeitstisches (13) dient und um eine Drehachse (21) desselben drehbar ist, welche Drehachse in der Schweißbrennerbewegungsbahn (6a) enthalten ist;

- mindestens ein elektromagnetisches Spannfutter (19), das an einer an die Schweißbrennerbewegungsbahn (6a) angrenzenden Stelle vorgesehen ist und zum Magnetisieren und Halten des hinteren Endes (1a) des vorangehenden Streifens (1) dient; und
- Hebeglieder (45), die an einer vor dem Arbeitstisch (13) liegenden Stelle vorgesehen sind und zum Heben und Drehen des Förderendes (2a) des nachfolgenden Streifens in einer Richtung nach unten und schräg zum Hinterende (1a) des vorangehenden Streifens (1) dienen.

**6.** Vorrichtung zum Schneiden, Stoßen und Verschweißen eines hinteren Endes (1a) eines vorangehenden Stahlstreifens (1) mit einem vorderen Ende (2a) eines nachfolgenden Stahlstreifens (2) unter Verwendung eines Laserstrahls währenddem die zwei Streifen (1 und 2) entlang einer Stahlstreifenprozeßstrecke voranschreiten, wobei die einander zugewendeten hinteren und vorderen Enden (1a und 2a) der beiden Streifen (1 und 2) aufeinanderfolgend einem Schneide- und Stoßvorgang unterworfen werden um eine Stoßlinie zu bilden und wobei mittels der Laserstrahlen eine Verschweißung entlang der Stoßlinie ausgeführt wird, um eine endseitige Verbindung zwischen den einander gegenüberliegenden hinteren und vorderen Enden (1a und 2a) zu erzielen, wobei die Vorrichtung aufweist:

- einen in einem Abschnitt der Stahlstreifenprozeßstrecke angeordneten Arbeitstisch, der eine Oberfläche mit einer hinteren Traverse (15) an einem Abschnitt desselben hat;
- einen Laserbrenner (6) der über dem Arbeitstisch (13) längs einer Brennerbewegungsbahn (6a) senkrecht zur Mittellinie (C-C) laufen kann und außerdem vertikal zur hinteren Traverse (15) und von diesem weg beweglich ist;
- eine Vorschubvorrichtung (3 und 4) die vor dem Laserschweiß/Schneidbrenner (6) und vor der Stahlstreifenprozeßstrekke angeordnet ist und die zum Vorschieben der Streifen (1 und 2) dient;

dadurch gekennzeichnet, daß der Arbeitstisch längs einer Mittellinie (C-C) der Stahlstreifenprozeßstrecke beweglich ist;

- der Brenner (6) zum Schneiden und gleichzeitigen Verschweißen des hinteren und vorderen Endes (1a und 2a) jeweils der beiden Streifen (1 und 2) mittels des Laserstrahls dient;

und daß die Vorrichtung weiterhin aufweist:

- einen Drehtisch (20) der zur Lagerung des Arbeitstischs (13) dient und der um eine Drehachse (21) desselben drehbar ist, welche Drehachse in der Brennerbewegungsbahn (6a) enthalten ist;
- eine Abbrand-Abtrennlücke (46), die auf dem Arbeitstisch (13) neben der hinteren Traverse (15) vorgesehen ist;
- mindestens ein elektromagnetischeS Spannfutter (19), das an einer an die Brennerbewegungsbahn (6a) angrenzenden Stelle vorgesehen ist und das zur Magnetisierung und zum Halten des hinteren Endes (1a) des vorangehenden Stahlstreifens (1) dient; und
- Hebeglieder (45), die an einer Position vor dem Arbeitstisch (13) vorgesehen sind und die zum Heben und Drehen des vorderen Endes (2a) des nachfolgenden Streifens (2) in einer Richtung nach unten und schräg zum hinteren Ende (1a) des vorangehenden Streifens (1) dienen.

**7.** Vorrichtung nach Anspruch 5 oder 6, dadurch gekennzeichnet, daß sie außerdem mindestens zwei optische Vergrößerungsvorrichtungen (37 und 38) aufweist, die eine Hin- und Herbewegung auf dem Arbeitstisch (13) entlang einer senkrecht zur Mittellinie (C-C) der Stahlstreifenprozeßstrecke liegenden Bahn ausführen können.

## Revendications

**1.** Procédé de découpage, de mise bout-à-bout et de soudage d'extrémités (1a et 2a), se faisant face, de bandes en acier (1 et 2), avancées, de manière successive, le long d'une ligne de traitement de bande d'acier, au moyen d'un faisceau laser, ledit procédé comprenant les étapes de découpage desdites extrémités (1a et 2a) opposées de bandes d'acier précédente et suivante (1 et 2), de mise bout-à-bout, des extrémités découpées (1a et 2a) correspondantes, de manière à former une ligne de bout-à-bout et soudage au moyen du faisceau laser, suivant ladite ligne de bout-à-bout, pour obtenir une liaison bout-à-bout desdites extrémités opposées (1a et 2a),

caractérisé en ce que ladite étape de mise bout-à-bout comprend, en outre, les étapes d':

- aimantation d'une extrémité arrière (1a) de la bande d'acier précédente (1), de manière à y produire une force magnétique et maintien simultanément de ladite extrémité arrière (1a) de ladite bande d'acier précédente (1) de façon qu'une bordure latérale (1b) de ladite bande précédente (1) soit alignée pour être parallèle à une ligne centrale (C-C) de ladite ligne de traitement de bande d'acier et de façon que ladite extrémité arrière (1a) de ladite bande précédente (1) coïncide avec une trajectoire de déplacement (6a) d'un chalumeau de soudage au laser (6), lui permettant de s'étendre dans une direction perpendiculaire audit axe (C-C), en utilisant un mandrin électromagnétique (19) contigu à ladite trajectoire de déplacement (6a),
- rotation d'une extrémité avant (2a) de la bande d'acier (2) immédiatement suivante, dans une direction orientée vers le bas et oblique par rapport à ladite extrémité arrière (1a) de ladite bande d'acier précédente (1), au cours de l'approche de ladite extrémité avant (2a) vers ladite extrémité arrière (1a) et
- attraction de ladite extrémité avant (2a) par ladite extrémité arrière (1a), en utilisant ladite force magnétique produite par ladite extrémité arrière (1a), jusqu'à ce que ladite extrémité arrière (1a) soit en contact avec ladite extrémité avant (2a).

**2.** Procédé selon la revendication 1, caractérisé en ce que ledit alignement latérale de la bordure latérale (1b ou 2b) de ladite bande d'acier précédente (1) ou de ladite bande d'acier suivante (2), parallèlement audit axe (C-C), est réalisé par un procédé comprenant les étapes d':
- attraction d'une surface inverse de ladite bande d'acier précédente (1) ou bien de ladite bande d'acier suivante (2), au moyen d'un mandrin électromagnétique (7a, 8a ou 9a) pouvant se déplacer le long d'une ligne transversale, de manière sensiblement perpendiculaire audit axe (C-C), avant ladite étape de découpage ou de mise bout-à-bout desdites extrémités (1a et 2a) se faisant face desdites bandes d'acier précédente et suivante (1 et 2),
- déplacement dudit mandrin électromagnétique (7a, 8a ou 9a) le long de ladite ligne transversale et tirage simultanément de ladite bande d'acier précédente ou suivante (1 ou 2), jusqu'à ce que sa bordure latérale (1b ou 2b) soit mise en contact avec un bloc de référence (7b, 8b ou 9b), disposé parallèlement audit axe (C-C) et
- provocation d'un glissement de ladite bande d'acier précédente ou suivante (1 ou 2) par rapport audit mandrin électromagnétique (7a, 8a ou 9a), tout en ajustant une force d'attraction magnétique dudit mandrin électromagnétique (7a, 8a ou 9a) grâce à un réglage du courant devant le traverser, de manière à obtenir un alignement latéral de ladite bordure latérale (1b ou 2b) de ladite bande d'acier précédente ou suivante (1 ou 2).

**3.** Procédé selon la revendication 1 ou 2, caractérisé en ce que ladite bande d'acier précédente ou suivante (1 ou 2) présente une épaisseur comprise dans la plage allant de 0,05 mm à 1,0 mm.

**4.** Procédé selon l'une quelconque des revendications 1 à 3, caractérisé en ce que ladite bande d'acier précédente ou suivante (1 ou 2) est une bande d'acier contenant du silicium.

**5.** Procédé de découpage, de mise bout-à-bout et de soudage, au moyen d'un faisceau laser, d'une extrémité arrière (1a) d'une bande d'acier précédente (1) à une extrémité avant (2a) lui faisant face, d'une bande d'acier suivante (2), au cours de l'avancement desdites deux bandes (1 et 2) le long d'une ligne de traitement de bande d'acier, dans lequel lesdites extrémités arrière et avant (1a et 2a) se faisant face desdites deux bandes (1 et 2) sont soumises séquentiellement à un découpage et à leur mise bout-à-bout, de manière à former une ligne de mise bout-à-bout et à un soudage suivant ladite ligne de mise bout-à-bout au moyen d'un faisceau laser, pour obtenir une liaison bout-à-bout entre lesdites extrémités arrière et avant (1a et 2a) se faisant face, ledit appareil comprenant:
- une table de travail (13) disposée dans une partie de ladite ligne de traitement de bande d'acier et présentant une surface pourvue d'une tige de verso (15) sur une partie de cette dernière,
- un chalumeau de soudage au laser (6) capable de s'étendre sur ladite table de travail (13), suivant une trajectoire de déplacement de chalumeau (6a) perpendiculaire audit axe (C-C) et également de se déplacer verticalement pour se rapprocher et s'éloigner de ladite tige de verso (15),
- un dispositif de découpage (5) disposé dans une position située à l'avant de ladite table de travail (13) de ladite ligne de traitement de bande d'acier, ledit dispositif de découpage (5) servant à découper lesdites extrémités arrière et avant (1a et 2a) se faisant face desdites deux bandes (1 et 2), suivant une ligne sensiblement perpendiculaire audit axe (C-C),

- un dispositif d'amenée (3 et 4) disposé dans une position située à l'avant dudit dispositif de découpage (5) et à l'avant de ladite ligne de traitement de bande d'acier, ledit dispositif d'amenée servant à avancer respectivement lesdites deux bandes (1 et 2),

caractérisé en ce que ladite table de travail (13) peut être déplacée le long de l'axe (C-C) de ladite ligne de traitement de bande d'acier et en ce que l'appareil comprend, en outre:

- une table rotative (20) servant à supporter ladite table de travail (13), ladite table rotative (20) pouvant être entraînée en rotation autour d'un pivot (21) de cette dernière, ce pivot étant inclus dans ladite trajectoire de déplacement de chalumeau (6a),
- au moins un mandrin électromagnétique (19) prévu dans une position contiguë à ladite trajectoire de déplacement de chalumeau (6a) et servant à aimanter et à maintenir ladite extrémité arrière (1a) de ladite bande précédente (1) et
- des moyens de levée (45) prévus dans une position située à l'avant de ladite table de travail (13), lesdits moyens de levée (45) servant à lever et à tourner ladite extrémité avant (2a) de ladite bande suivante (2), dans une direction orientée vers le bas et oblique par rapport à ladite extrémité arrière (1a) de ladite bande précédente (1).

**6.** Appareil de découpage, de mise bout-à-bout et de soudage, au moyen d'un faisceau laser, d'une extrémité arrière (1a) d'une bande d'acier précédente (1) à une extrémité avant (2a) d'une bande d'acier suivante (2), au cours de l'avancement desdites deux bandes (1 et 2) le long d'une ligne de traitement de bande d'acier, dans lequel lesdites extrémités arrière et avant (1a et 2a) se faisant face desdites deux bandes (1 et 2) sont soumises, séquentiellement, à un découpage et à leur mise bout-à-bout, de manière à former une ligne de mise bout-à-bout, et à un soudage, suivant ladite ligne de mise bout-à-bout, au moyen d'un faisceau laser, pour obtenir une liaison bout-à-bout entre lesdites extrémités arrière et avant (1a et 2a) se faisant face, ledit appareil comprenant:

- une table de travail (13) disposée dans une partie de ladite ligne de traitement de bande d'acier et présentant une surface pourvue d'une tige de verso (15) sur une partie de cette dernière,
- un chalumeau à laser (6) capable de se déplacer sur ladite table de travail (13), suivant une trajectoire de déplacement de chalumeau (6a) perpendiculaire audit axe (C-C) et également de se déplacer verticalement pour se rapprocher et s'éloigner de ladite tige de verso (15),
- un dispositif d'amenée (3 et 4) disposé dans une position située à l'avant dudit chalumeau de soudage/découpage au laser (6) et à l'avant de ladite ligne de traitement de bande d'acier, ledit dispositif d'amenée (3 et 4) servant à avancer lesdites bandes (1 et 2),

caractérisé en ce que ladite table de travail (13) peut être déplacée le long de l'axe (C-C) de ladite ligne de traitement de bande d'acier, ledit chalumeau (6) sert à découper et à souder simultanément lesdites extrémités arrière et avant (1a et 2a) au moyen d'un faisceau laser,

et en ce que l'appareil comprend, en outre:

- une table rotative (20) servant à supporter ladite table de travail (13), ladite table rotative (20) pouvant être entraînée en rotation autour d'un pivot (21) de cette dernière, ce pivot étant inclus dans ladite trajectoire de déplacement de chalumeau (6a),
- une gorge de séparation de matériau en fusion (46) prévue sur ladite table de travail (13), de manière adjacente à ladite tige de verso (15),
- au moins un mandrin électromagnétique (19) prévu dans une position contiguë à ladite trajectoire de déplacement de chalumeau (6a), ledit mandrin électromagnétique (19) servant à aimanter et à maintenir ladite extrémité arrière (1a) de ladite bande précédente (1) et
- des moyens de levée (45) prévus dans une position située à l'avant de ladite table de travail (13), lesdits moyens de levée (45) servant à lever et à tourner ladite extrémité avant (2a) de ladite bande suivante (2), dans une direction orientée vers le bas et oblique par rapport à ladite extrémité arrière (1a) de ladite bande précédente (1).

**7.** Appareil selon la revendication 5 ou 6, caractérisé en ce que ledit appareil comprend au moins deux moyens d'agrandissement optiques (37 et 38) pouvant se déplacer en va-et-vient sur ladite table de travail (13), suivant une ligne perpendiculaire audit axe (C-C) de ladite ligne de traitement de bande d'acier.

Fig.1

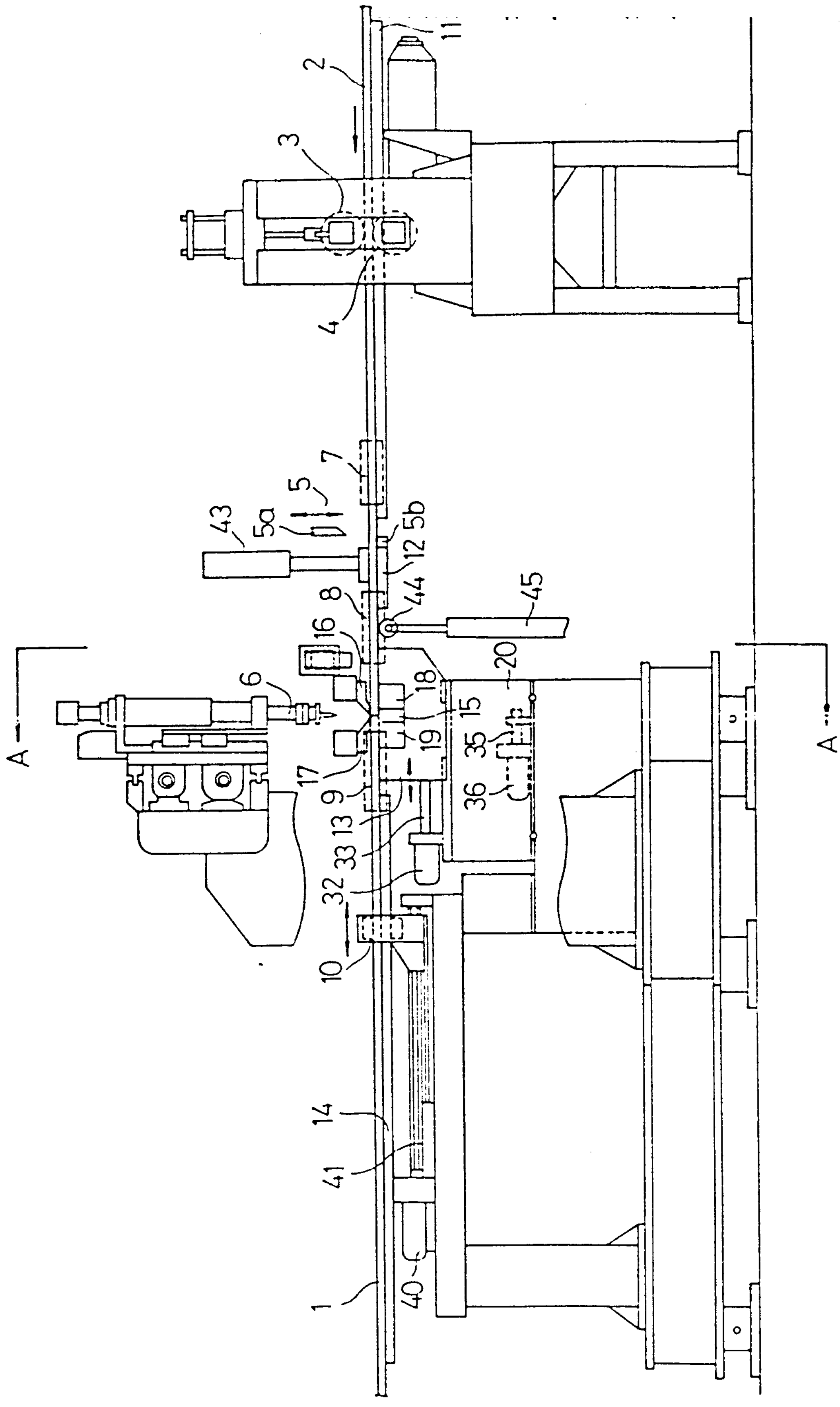
A
A
1
2
3
4
5
5a
5b
6
7
8
9
10
11
12
13
14
15
16
17
18
19
20
32
33
35
36
40
41
43
44
45

Fig.2

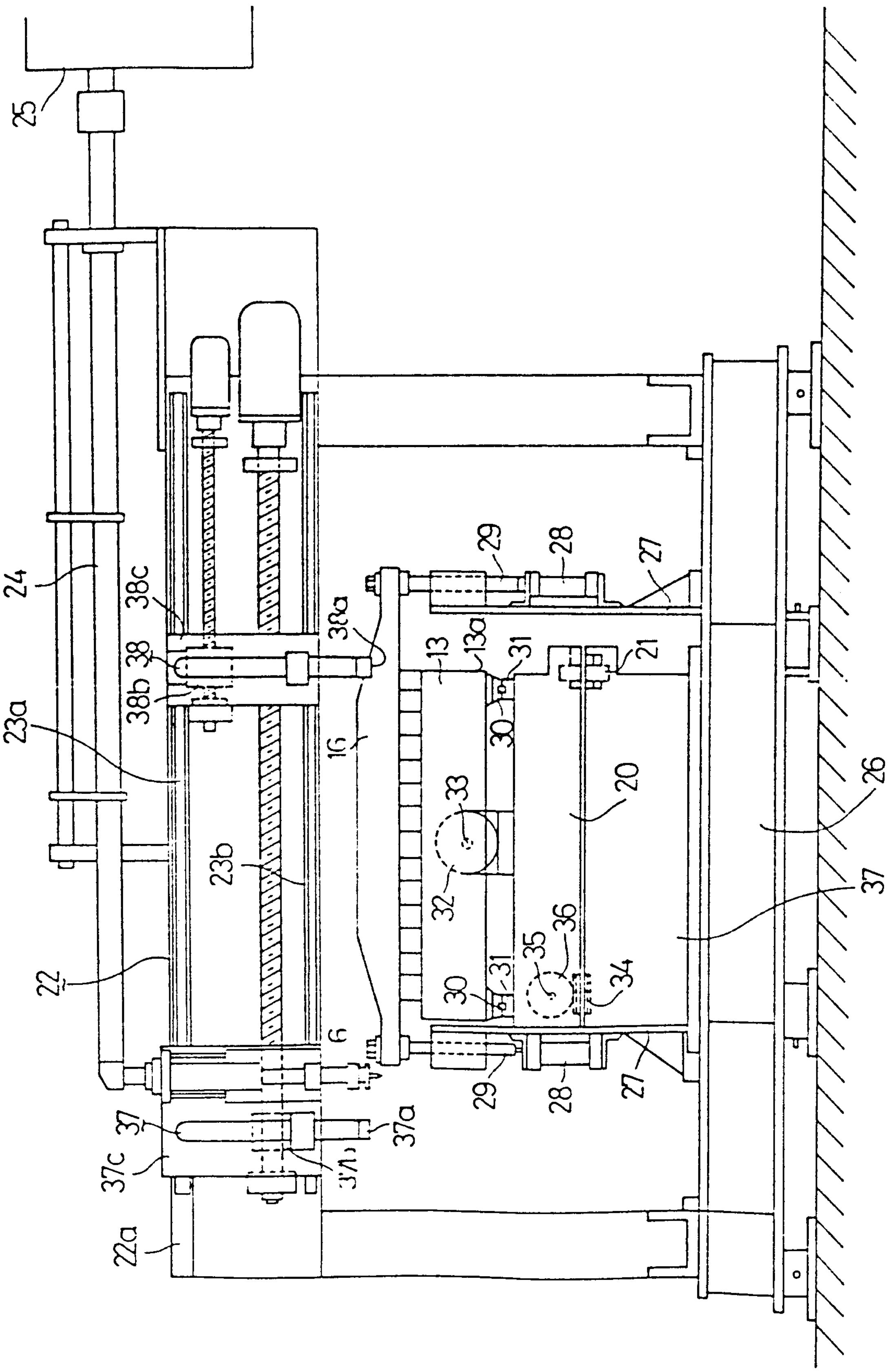
25
24
38c
38
38b
38a
23a
22
23b
16
13
13a
31
30
21
29
28
27
20
33
32
35
36
34
26
37
6
37c
37a
22a

Fig. 3

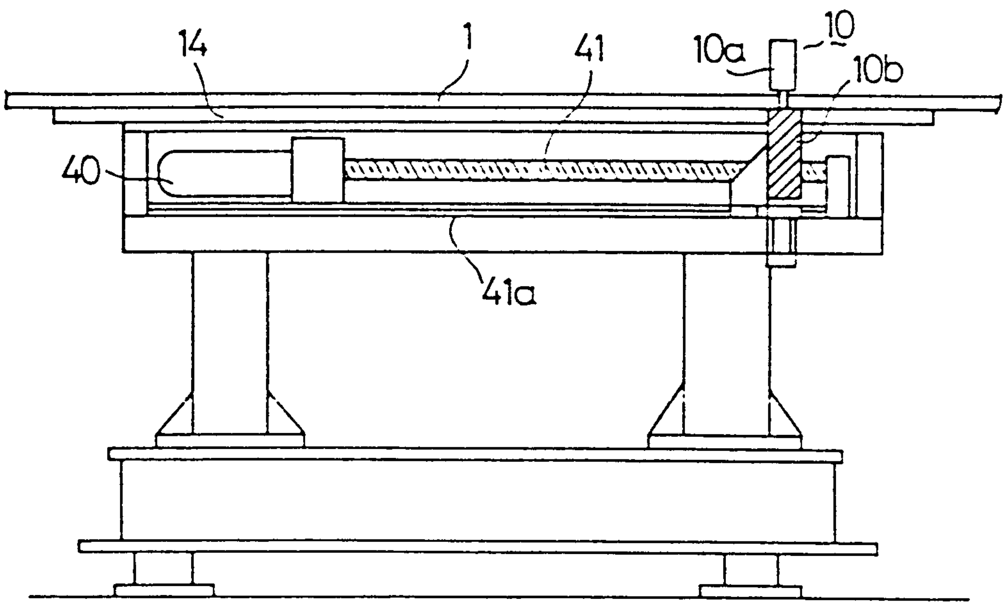

Fig. 4

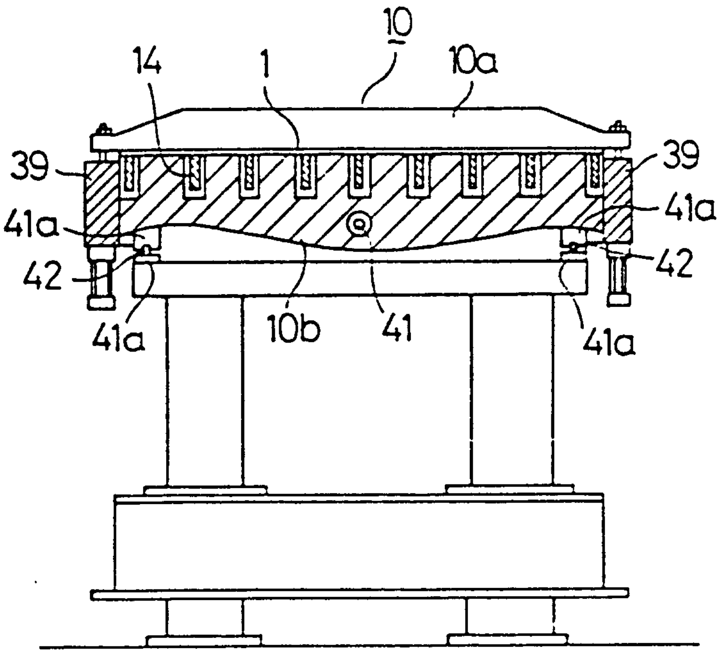

Fig.5

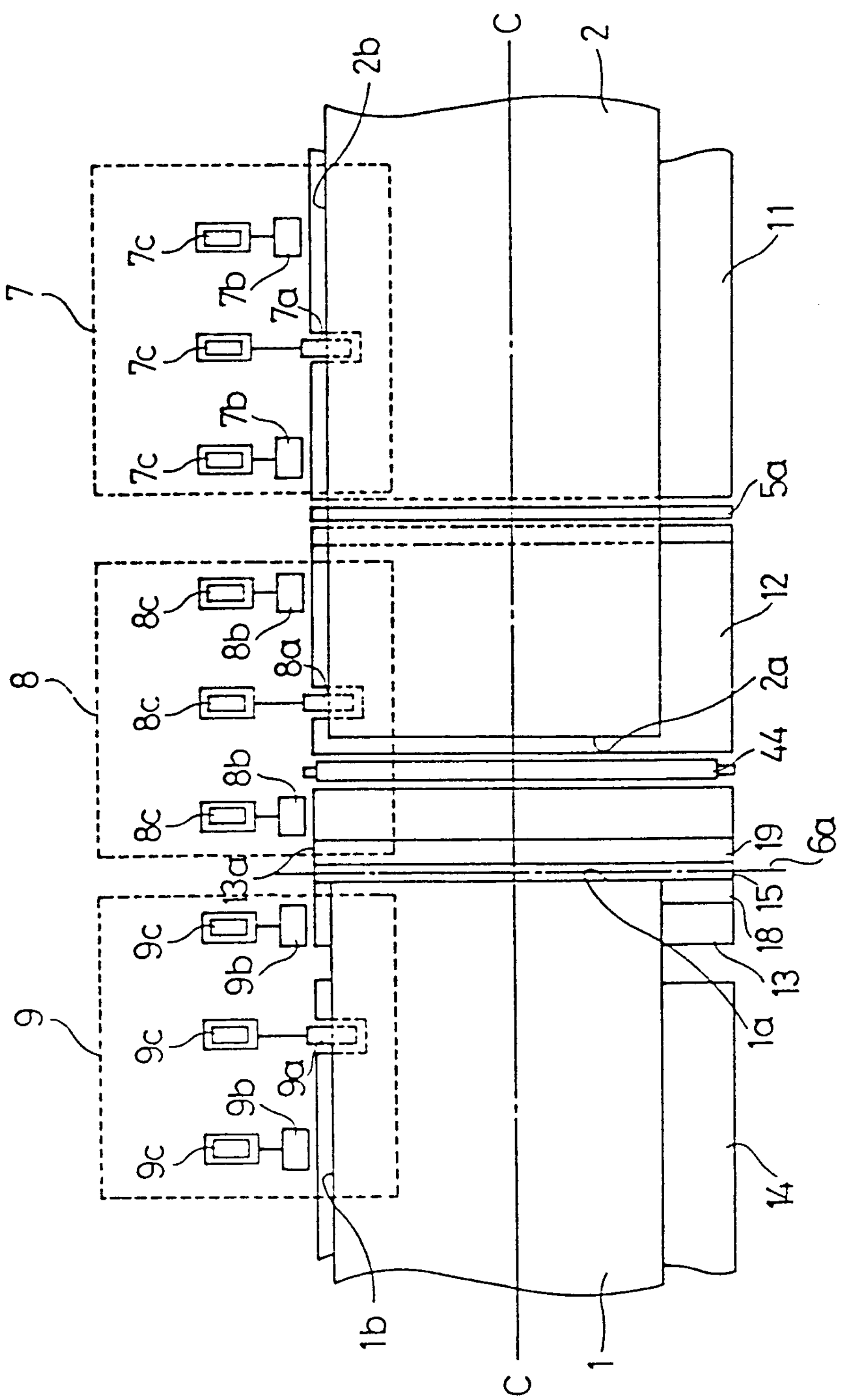
C
2
2b
7
7c
7b
7a
11
5a
8
8c
8b
8a
12
2a
44
19
6a
13a
15
18
13
1a
9
9c
9b
9a
14
1b
1
C

Fig. 6(a)

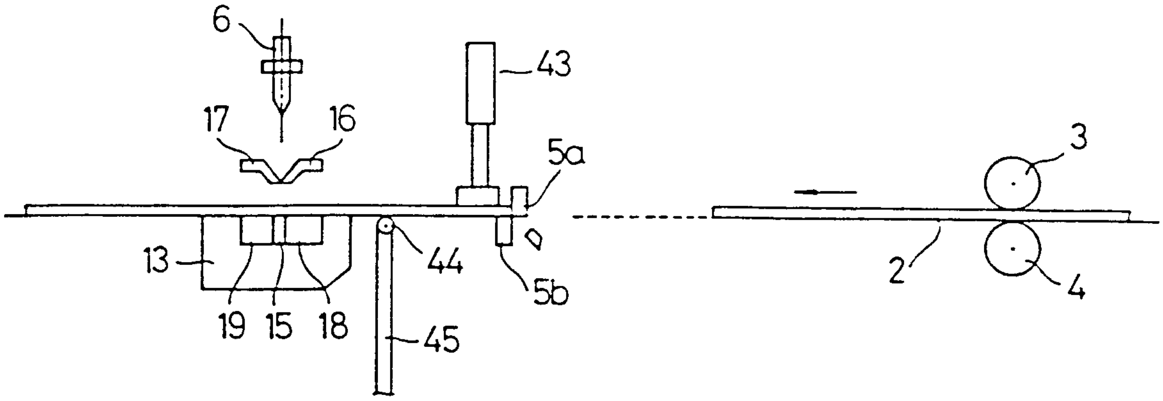
6
43
17
16
5a
3
13
44
5b
2
4
19 15 18
45

Fig. 6(b)

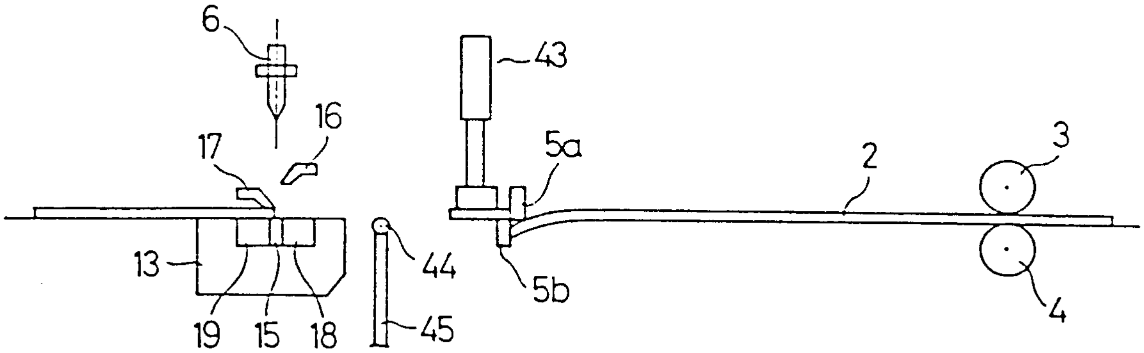
6
43
16
17
5a
2
3
13
44
5b
4
19 15 18
45

Fig. 6(c)

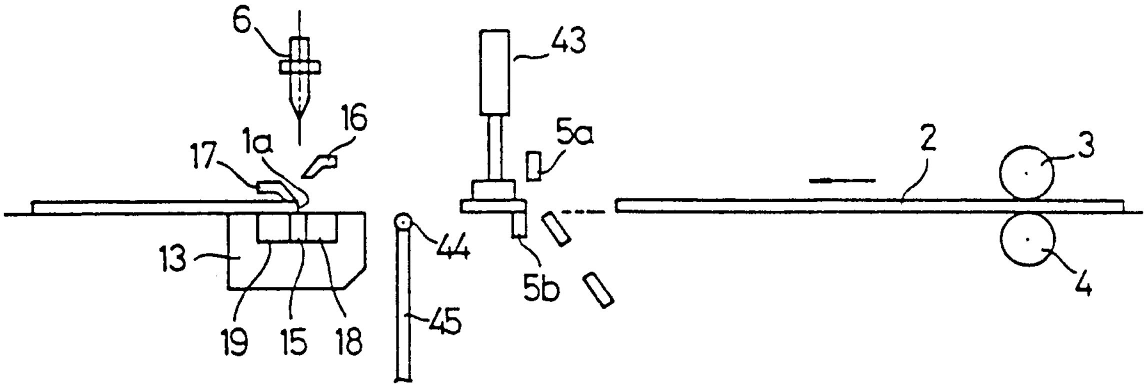
6
43
1a
16
17
5a
2
3
13
44
5b
4
19
15
18
45

Fig. 6(d)

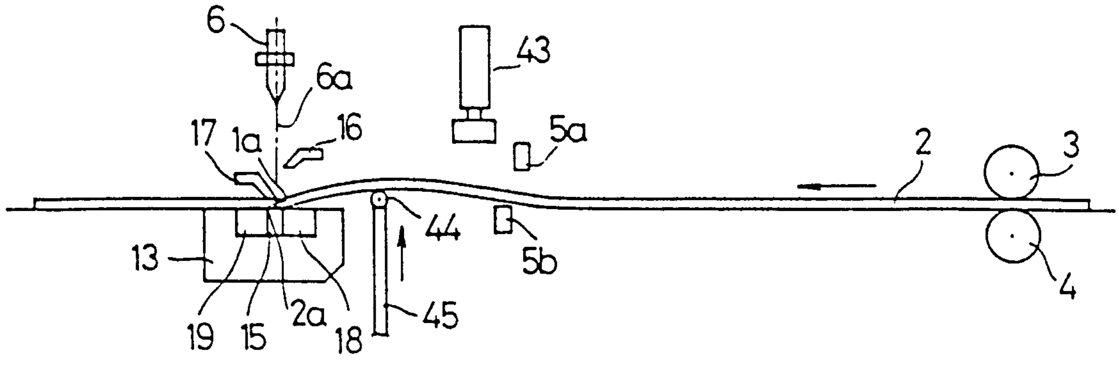
6
43
6a
17
1a
16
5a
2
3
13
44
5b
4
19
15
2a
18
45

Fig. 6(e)

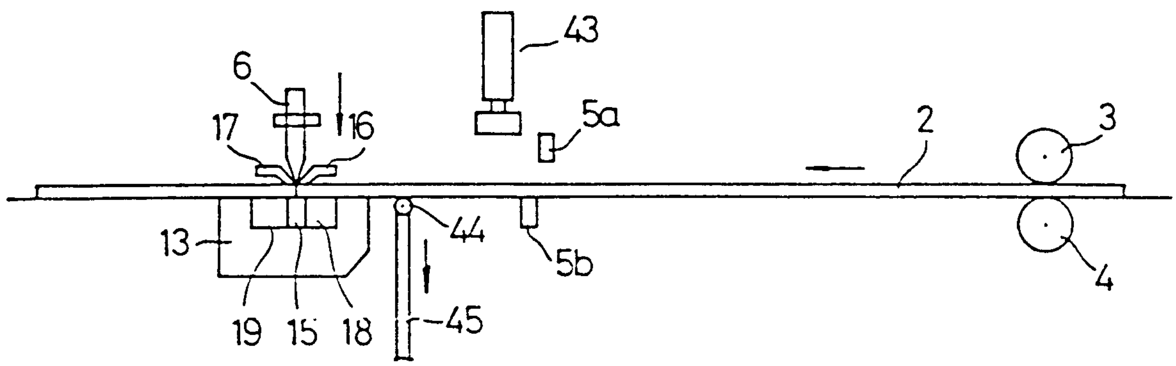

Fig. 7

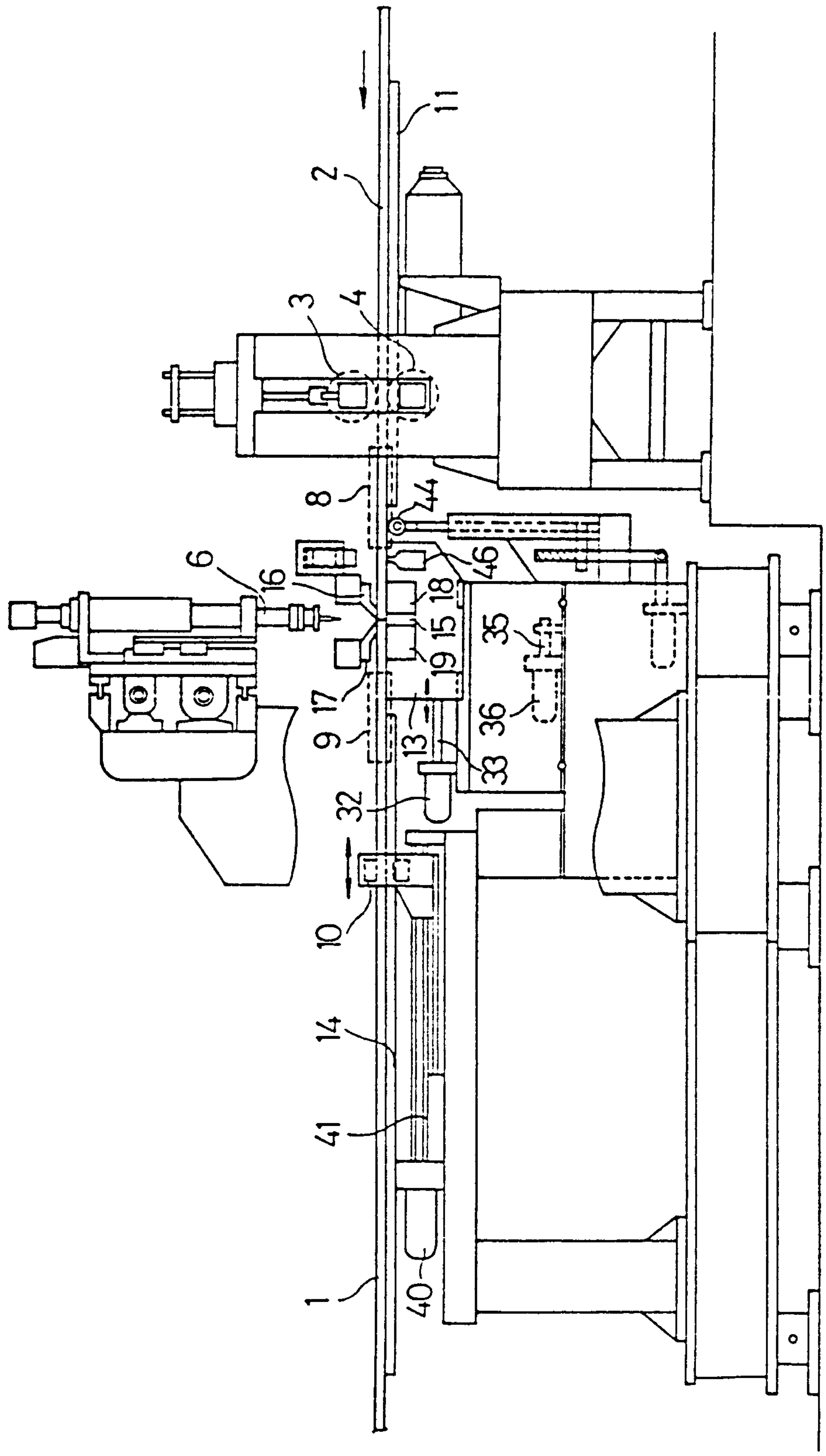

Fig. 8

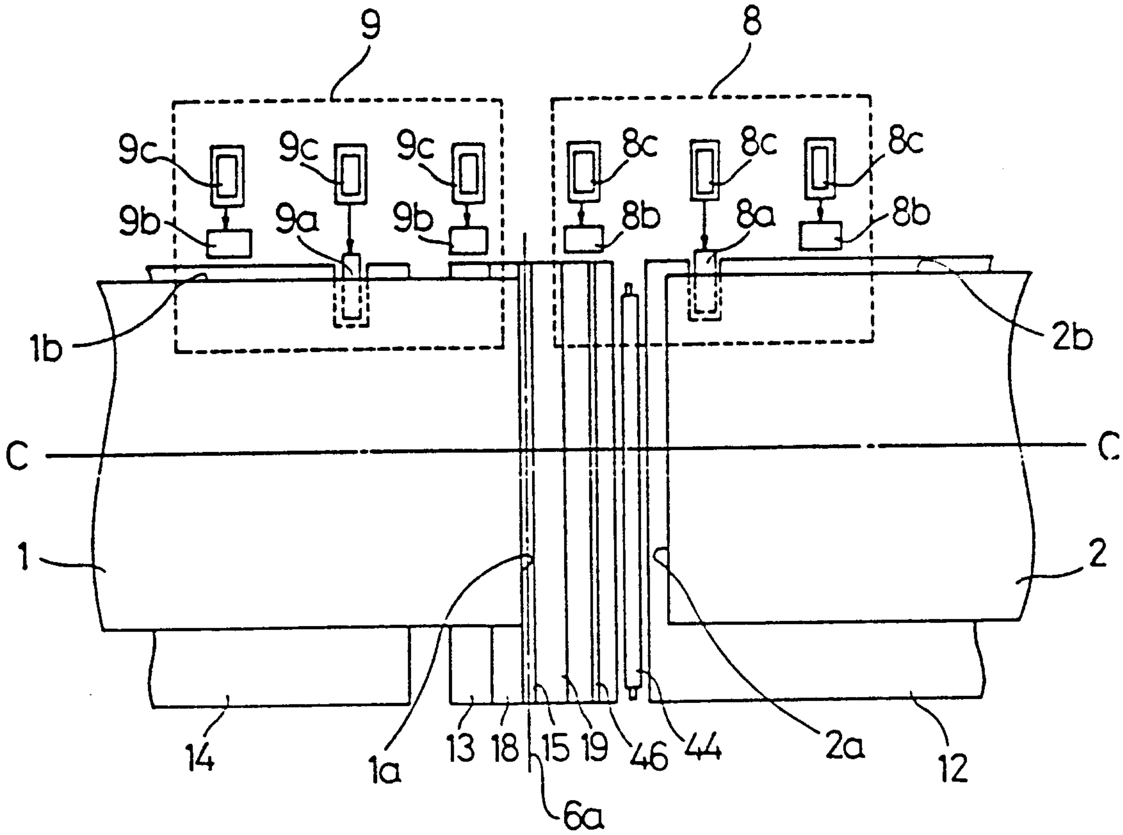
9
8
9c
9c
9c
8c
8c
8c
9b
9a
9b
8b
8a
8b
1b
2b
C
C
1
2
14
1a
13
18
15
19
46
44
2a
12
6a